# EUROPÄISCHE PATENTSCHRIFT

(11) **EP 4 078 002 B1**
(45) Veröffentlichungstag und Bekanntmachung des Hinweises auf die Patenterteilung: **07.05.2025**
(21) Anmeldenummer: 20835731.9
(22) Anmeldetag: 15.12.2020
(51) Int. Cl.: F16L 37/138, F16L 37/35

(54) **SCHNELLKUPPLUNG ZUM VERBINDEN**
QUICK COUPLING FOR CONNECTION
RACCORD RAPIDE POUR RACCORDEMENT

(30) Priorität: 16.12.2019 DE 102019134586
(43) Veröffentlichungstag der Anmeldung: 26.10.2022
(73) Patentinhaber: EM-Technik GmbH, 67133 Maxdorf (DE)
(72) Erfinder: MEIER, Michael, 67133 Maxdorf (DE)
(74) Vertreter: STT Sozietät Thews & Thews
(86) Internationale Anmeldenummer: PCT/EP2020/086295
(87) Internationale Veröffentlichungsnummer: WO 2021/122651

(56) Entgegenhaltungen:
- US-A- 5 740 835
- US-A1- 2006 260 699
- US-A1- 2012 031 515

## Beschreibung

Die Erfindung bezieht sich auf eine Schnellkupplung für aggressive Medien wie starke Säuren und Basen. Solche Schnellkupplungen dienen zum mittel- oder unmittelbaren Verbinden von zwei ein Medium transportierenden Leitungen über einen durch die Schnellkupplung verlaufenden Fluidkanal. Die Schnellkupplung weist ein als Muffe ausgebildetes erstes Kupplungsteil und ein als Nippel ausgebildetes zweites Kupplungsteil auf, wobei die Muffe und der Nippel jeweils ein zumindest teilweise rotationssymmetrisch zu einer Mittelachse M angeordnetes hohles Gehäuse zum Zusammenstecken bilden. Innerhalb der Muffe ist ein erster Ventilkörper und innerhalb des Nippels ein zweiter Ventilkörper sowie jeweils in axialer Richtung an den jeweiligen Ventilkörper anschließend ein elastisches Element angeordnet. Der Fluidkanal verläuft in radialer Richtung zumindest teilweise außerhalb und/oder zumindest teilweise innerhalb des elastischen Elements. Der Ventilkörper ist durch das elastische Element in axialer Richtung verschiebbar und vorspannbar, wodurch der Fluidkanal zwischen dem Gehäuse und dem Ventilkörper geöffnet oder geschlossen wird. Der Ventilkörper und das elastische Element bilden ein einteiliges Bauteil, wobei das elastische Element eine konzentrisch um die Mittelachse umlaufende Spirale mit einem innen in der Spirale angeordneten Hohlraum aufweist.

Es ist bereits eine Schnellkupplung aus der DE 28 26 344 A1 bekannt, bei der ein Nippel in eine Muffe geführt wird und innerhalb dieser beiden Bauteile jeweils ein durch Federelemente vorgespannter Ventilkörper angeordnet ist. Für eine Dichtung zwischen der Innenfläche der Muffe und der Außenfläche des Nippels sind mehrere Dicht- und Distanzelemente vorgesehen, die sich beim Schließen und beim Öffnen der Kupplung relativ zur Muffe und an der Innenfläche der Muffe bewegen.

Nach der DE 36 18 233 C2 ist eine Schnellkupplung bekannt, bei der eine Druckfeder für das Ventilglied in den Zylinderabschnitt des Ventilgliedes eingefügt ist und ein Ende der Druckfeder in einer röhrenförmigen Federhalterung liegt. Dabei bilden das Ventilglied und die Druckfeder insgesamt zwei Bauteile.

Die Druckschrift WO 95/24584 beschreibt einen Ventileinsatz, der als einstückiges Bauteil ausgestaltet ist. Der Ventileinsatz weist ein Halteelement, eine Ventilfeder und einen Ventilsitz auf. An die Ventilfeder schließt sich ein hülsenförmiger Fortsatz an, der den Ventilsitz trägt. Der Fortsatz weist ein Innengewinde auf, in welches ein Schraubstopfen gasdicht eingeschraubt ist. Das als Ventilkörper funktionsfähige Bauteil ist zweiteilig und besteht aus dem Ventileinsatz und dem funktional notwendigen Schraubstopfen zum Abdichten des Hohlraums. Der Ventilkörper ist rundum geschlossen dicht, wodurch der Hohlraum als pneumatische Feder ausgebildet ist.

Nach der US 2012/031515 A1 ist eine gattungsgemäße Schnellkupplung mit Ventilkörpern und elastischen Elementen bekannt, wobei die elastischen Elemente hohl sind, als Fluidkanal dienen und in radialer Richtung durchströmt werden. Soweit Spiralfedern als elastische Elemente dienen, ist auch bei einem maximal komprimierten Zustand der Spiralfedern ein Abstand zwischen den Spiralen als Fluidkanal in radialer Richtung durch das elastische Element gegeben.

In der US 2006/260699 A1 ist eine gattungsgemäße Schnellkupplung mit Ventilkörpern und elastischen Elementen beschrieben, bei der die elastische Elemente meanderförmig ausgebildet sind und vom Fluid umströmt werden.

Der Erfindung liegt die Aufgabe zugrunde, eine Schnellkupplung zur Verwendung mit starken Säuren und starken Basen derart auszubilden und anzuordnen, dass sie sicherer und damit auch einfacher zusammenzubauen und zu warten ist.

Gelöst wird die Aufgabe erfindungsgemäß durch die Merkmale des Anspruchs 1.

Durch die einteilige Bauweise entfällt die Notwendigkeit, das elastische Element und den Ventilkörper in der Flucht axial und radial zueinander auszurichten. Bei einer zweiteiligen Bauform ist dies zwingend erforderlich, da das elastische Element ansonsten eine exzentrische und dezentrale Kraft auf den Ventilkörper ausüben könnte, wodurch sich dieser nicht mehr selbstzentrieren könnte und Gefahr läuft, sich querzustellen und zu blockieren. Daraus ergibt sich bei der zweiteiligen Ausführung die zwangsweise Notwendigkeit, zumindest den Ventilkörper, besser noch Ventilkörper und elastisches Element, axial zu führen. Erfindungsgemäß entfällt diese Notwendigkeit, da das elastische Element durch die Einteiligkeit mit dem Ventilkörper immer eine zentrale Kraft auf den Ventilkörper ausübt.

Durch die nicht notwendige Zwangsführung mithilfe des Gehäuses kann auf eine Führung in axialer Richtung verzichtet werden. Dadurch sind keine aufwendige Fertigung einer Passung zwischen dem Ventilkörper und dem Gehäuse und ebenso wenig weitere Bauteile zur Führung notwendig. Das aufgrund der nicht notwendigen Passung gegebene Spiel des Ventilkörpers in radialer Richtung hat den weiteren Vorteil, das elastische Element mit einer geringeren Federkonstante ausführen zu können, da keine Reibungskräfte zwischen dem Ventilkörper und dem Gehäuse oder anderen hier nicht notwendigen Bauteilen auftreten können.

Ein Verschließen des Ventils ist durch die Einteiligkeit in Verbindung mit den daraus resultierenden und vorstehend beschriebenen Vorteilen sichergestellt, da der Ventilkörper nicht in der geöffneten Stellung steckenbleiben kann. Es resultiert der weitere Vorteil, dass beim Zusammenbau der Schnellkupplung lediglich ein Bauteil in das Gehäuse eingesteckt und mit einem Sicherungsring funktionsfähig positioniert wird.

Abgesehen von einem in die Muffe eingesetzten Dichtmittel ist es somit möglich, die Anzahl an einzelnen Bauteilen, die unabhängig von einer Sicherung in das jeweilige Gehäuse eingesetzt werden müssen, auf ein Bauteil zu reduzieren.

Bevorzugt wird der Ventilkörper mit dem elastischen Element aus einem fluorierten Kunststoff oder aus einem Polymer bestehend aus Fluor und Kohlenstoff und im Speziellen aus Perfluoralkoxy-Polymeren (PFA) oder aus Polytetrafluorethylen (PTFE) hergestellt. Diese Kunststoffe sind resistent gegen Säuren und Basen. Das elastische Element besitzt wegen des Kunststoffs eine relativ geringe Federkonstante. Deshalb ist der Hub und somit die Auslenkung der beiden Verschlussteile entsprechend groß gewählt, damit je nach Strömungsrichtung der relevante Ventilkörper entgegen dem dynamischen Druck des Mediums beim Trennen von Muffe und Nippel sicher und schnell schließt. Der Hub wirkt sich wie nach der Figurenbeschreibung deutlich wird auch auf den Strömungsquerschnitt des Fluidkanals aus, der aber auch durch die Durchmesserverhältnisse zwischen der Innenfläche der Muffe und der Außenfläche quantifiziert wird. Kunststoff ist im Gegensatz zu Metall resistent gegen Säuren und Basen und gewährleistet dadurch eine langzeitstabile Federkonstante und Federkraft, was zu einer besseren Dichtung führt. Weiter bevorzugt sind das Gehäuse, der Ventilkörper, das elastische Element sowie die komplette Arretierung umfassend eine Hülse, einen Träger mit Krallen sowie ein Federelement aus Kunststoff, insbesondere aus Perfluoralkoxy-Polymeren (PFA) oder aus Polytetrafluorethylen (PTFE) hergestellt.

Es gilt aber grundsätzlich zu beachten, dass es bei gattungsgemäßen Schnellkupplungen, die für aggressive Medien wie starke Säuren und Basen eingesetzt werden, notwendig ist, dass sie beim Schließen und Öffnen tropffrei sowie absolut korrosionsbeständig sind und aufgrund der für solche Medien geringen Masseströme auch bei kleinen Leitungsquerschnitten und damit bei kleinen Baugrößen absolut sicher funktionieren. Insbesondere sind Fugen und Spalten wegen kristalliner Ablagerungen der Säuren und Basen nachteilig. Auch bei Querschnittsflächen im Inneren des Gehäuses zwischen 7 mm² und 30 mm² stellen die erfindungsgemäßen Merkmale ausreichend Sicherheit dar. Zu berücksichtigen gilt es dabei, dass die im Inneren des Gehäuses vorhandenen Strömungsquerschnitte durch die Ventilkörper und die elastischen Elemente um bis zu 80% reduziert werden, sodass ausgehend von den Querschnittsflächen im Inneren des Gehäuses für den Fluidkanal Strömungsquerschnitte von weniger als 5 mm² realisierbar sind.

Hinsichtlich der Herstellung ist es vorteilhaft, dass der Ventilkörper und das elastische Element ein materialidentisches Bauteil bilden. Die einteilige Bauweise erlaubt es, einen beispielsweise im Spritzgussverfahren hergestellten Rohling in einem Arbeitsprozess spanend zu bearbeiten. Das gilt insbesondere auch für Rohlinge aus Kunststoff, im Speziellen hergestellt aus Perfluoralkoxy-Polymeren (PFA) oder aus Polytetrafluorethylen (PTFE).

Hinsichtlich eines möglichst großen Strömungsquerschnitts ist es vorteilhaft, dass der Ventilkörper und/oder das elastische Element eine in radialer Richtung zur Mittelachse M hin gerichtete Öffnung aufweist, die als Fluidkanal dient. Die Öffnung im Ventilkörper ist dabei im Übergangsbereich zwischen dem geschlossenen Bereich des Ventilkörpers und dem elastischen Element vorgesehen. Die Öffnung im elastischen Element kann an jeder beliebigen Stelle in axialer Richtung entlang des elastischen Elements und um die Mittelachse M umlaufend um das elastische Element vorgesehen werden. Durch die Öffnung kann das Medium vom Ringkanal aus nach dem geschlossenen Ventilkörper in die Mitte des Gehäuses in das elastische Element und weiter in axialer Richtung aus dem Gehäuse herausfließen und bei umgekehrter Strömungsrichtung entsprechend entgegengesetzt. In der Mitte des Gehäuses ist der Strömungsquerschnitt größer.

Hinsichtlich einer einfachen Geometrie und einer nicht überbestimmten Dichtung im Ventilsitz des Ventilkörpers ist es vorteilhaft, dass der Ventilkörper ausschließlich über einen Ventilsitz im Gehäuse zentriert wird. Dabei ist bevorzugt eine kegelförmige Dichtfläche vorgesehen, die im geschlossenen Zustand des Ventils eine Selbstzentrierung bewirkt. Diese wird durch die eingangs beschriebene und durch die Einteiligkeit erreichte Führung in axialer Richtung unterstützt. Der bevorzugt einteilige Ventilkörper weist ein Verschlussteil auf, auf dem ein Dichtelement aufgebracht ist, das an einer zur Mittelachse M kegelförmigen Dichtfläche oder der jeweiligen Innenfläche des Gehäuses von der Muffe oder von dem Nippel durch das Bewegen des Ventilkörpers zumindest in axialer Richtung anlegbar ist, wobei das Dichtelement den Fluidkanal dichtend schließt. Der kegelförmige Abschnitt bildet dabei den Ventilsitz.

Die feste Positionierung des Dichtelements auf dem Ventilkörper trägt ebenfalls zur Reduzierung des Verschleißes bei und erhöht aufgrund der fehlenden Bewegung zwischen dem Dichtelement und dem Ventilkörper die Dichtheit. Bei dem erfindungsgemäßen Ventil wird wie üblich ein Verschlussteil (z. B. Teller, Kegel, Kugel oder Nadel) im Wesentlichen parallel zur Strömungsrichtung des Fluids bewegt. Die Strömung wird durch das Schließen des Ventils unterbrochen, indem das Verschlussteil mit der Dichtfläche an eine passend geformte Öffnung, den Ventilsitz, gedrückt wird. Die Kraft zum Drücken wird durch das jeweilige elastische Element aufgebracht.

Der einteilige Ventilkörper weist einen an das Verschlussteil anschließenden und dem elastischen Element gegenüberliegenden Bereich auf, der als Ventilschaft ausgebildet ist. Die beiden Ventilschäfte sind beim Schließen der Schnellkupplung und zum Öffnen des Fluidkanals in axialer Richtung mittel- oder unmittelbar aneinander anlegbar. Die Länge des Ventilschafts oder die Summe der Längen beider Ventilschäfte in axialer Richtung ist dabei so gewählt, dass sich die Ventilschäfte beim Einführen des Nippels in die Muffe erstmals berühren, sobald der Nippel mit seiner Außenfläche an dem in der Muffe festgesetzten Dichtmittel dichtend anliegt. Durch diese Geometrie ist es möglich, dass sich die beiden Ventilkörper entgegen der Vorspannung ihrer elastischen Elemente gegenseitig in axialer Richtung wegdrücken und erst dann den Fluidkanal öffnen, wenn die Schnellkupplung nach außen hin durch die Anlage des Nippels an dem in der Muffe festgesetzten Dichtmittel dicht ist.

Hinsichtlich einer sicheren Bedienung der Schnellkupplung ist es vorteilhaft, dass bei einem geschlossenen Ventilkörper der Ventilkörper relativ zu einer Gehäuseöffnung des Gehäuses um ein Maß Ma in axialer Richtung in das Gehäuse zurücksteht. Dadurch ist sichergestellt, dass der Ventilkörper nicht dann unbeabsichtigt geöffnet wird, wenn der Nippel oder auch die Muffe an dem jeweils offenen Ende berührt werden. Der geschlossene Ventilkörper liegt an der Innenseite des Gehäuses dichtend an. Von dieser geschlossenen Position aus bewegt sich der Ventilkörper beim Öffnen des Fluidkanals von der Gehäuseöffnung weg, in das Gehäuse hinein. Das Maß Ma ist je nach gewünschtem Maß an Sicherheit abhängig von dem Innendurchmesser des Gehäuses an der Gehäuseöffnung. Bevorzugt beträgt das Maß Ma mindestens 0,1 mm oder mindestens das Maß der axialen Länge einer Fase an der Gehäuseöffnung.

Für einen möglichst großen Strömungsquerschnitt ist es vorteilhaft, wenn der Fluidkanal in radialer Richtung nach außen über mindestens 50% der axialen Länge des elastischen Elements zwischen einer äußeren Mantelfläche des elastischen Elements und der Innenfläche des Gehäuses begrenzt ist. Dadurch wird der maximale Innendurchmesser des Gehäuses für den Fluidkanal ausgenutzt. In einem weiteren Strömungsabschnitt kann der Fluidkanal je nach Geometrie des elastischen Elements auch innerhalb des elastischen Elements verlaufen. Bei kleinen Schnellkupplungen ist es vorteilhaft, wenn der Fluidkanal über die gesamte axiale Länge des Ventilkörpers und über die gesamte axiale Länge des elastischen Elements sowohl den Ventilkörper als auch das elastische Element umgibt. Dabei bildet der Fluidkanal bevorzugt einen Ringspalt zwischen der inneren Gehäusewand und dem Ventilkörper sowie den elastischen Elementen.

Hinsichtlich eines großen Strömungsquerschnitts ist es weiter vorteilhaft, dass das elastische Element eine konzentrisch um die Mittelachse M umlaufende Spirale mit einem innen in der Spirale angeordneten Hohlraum aufweist. Der Hohlraum bildet erfindungsgemäß einen Teil des Fluidkanals. In diesem axialen Bereich wird das spiralförmige elastische Element vom Medium umströmt und durchströmt. Das Medium fließt in radialer Richtung durch die Spirale nach außen und innen.

Hinsichtlich einer sicheren Funktionsweise ist es vorteilhaft, dass in einem vollständig komprimierten Zustand des elastischen Elements die Öffnung zwischen den Spiralen erhalten bleibt. Dadurch wird eine Zwangsöffnung geschaffen, die auch bei maximaler Kompression des elastischen Elements einen Fluidkanal gewährleistet, durch den das Medium in radialer Richtung durch das elastische Element strömen kann.In Bezug auf eine sichere Bedienung ist es vorgesehen, dass in einer radialen Richtung zwischen der Innenfläche des Gehäuses der Muffe und der Außenfläche des Nippels ein Dichtmittel vorgesehen ist und das Dichtmittel in axialer Richtung an der Muffe oder an dem Nippel festgelegt ist, wobei bei geschlossenem Ventil in axialer Richtung der Abstand zwischen dem ersten Ventilkörper und der Mittelebene des Dichtmittels mindestens das Maß Ma beträgt.

Weiterhin kann es von Vorteil sein, wenn auf der Innenfläche der Muffe eine Nut zum Festlegen des Dichtmittels vorgesehen ist. Dadurch liegt das Dichtmittel in axialer Richtung an den Flanken der Nut an und der Innendurchmesser des Dichtmittels kann gleichzeitig vergrößert werden.

Dabei kann es von Vorteil sein, wenn die Außenfläche des Nippels eine zur Mittelachse M koaxial angeordnete Dichtfläche für das Dichtmittel bildet. Die Dichtfläche wirkt in radialer Richtung und dichtet beim Schließen der Kupplung mit dem Dichtmittel in der Muffe ab, bevor sich die beiden Ventilkörper berühren. Der Bereich des Gehäuses des Nippels kann als Tülle bezeichnet werden, welche die außen umlaufende Dichtfläche aufweist. Die Tülle wird beim Zusammenstecken durch das Dichtmittel hindurchgeführt und dichtet dadurch die beiden Gehäuse ab. Durch diese Geometrie ist es möglich, dass sich die beiden Ventilkörper entgegen der Vorspannung ihrer elastischen Elemente gegenseitig in axialer Richtung wegdrücken und erst dann den Fluidkanal öffnen, wenn die Schnellkupplung dicht ist beziehungsweise die beiden Gehäuse gegeneinander durch die Anlage des Dichtmittels an der Tülle abgedichtet sind. Das gleiche Prinzip in umgekehrter Reihenfolge findet beim Öffnen und Auseinanderziehen der Schnellkupplung Anwendung.

Durch den geforderten Abstand zwischen dem ersten Ventilkörper und der Mittelebene des Dichtmittels wird erreicht, dass sich die Ventilkörper beziehungsweise deren Ventilschäfte erst dann beim Schließen der Schnellkupplung berühren, wenn die Tülle schon dichtend an dem Dichtmittel anliegt.

In Bezug auf die geforderte Sicherheit bei Querschnittsflächen im Inneren des Gehäuses zwischen 7 mm² und 30 mm² ist bevorzugt, dass der Innendurchmesser des Gehäuses im Bereich der Tülle zwischen 2 mm und 6 mm beträgt. Dabei ist der Ventilschaft des Nippels in der Tülle im Gehäuse positioniert und geführt. Der Ringspalt um den Ventilschaft im Gehäuse des Nippels stellt aufgrund des gegenüber der Muffe reduzierten Durchmessers des Nippels gewöhnlich den geringsten Strömungsquerschnitt zur Verfügung.

Vorteilhaft kann es hierzu auch sein, wenn am Gehäuse der Muffe und am Gehäuse des Nippels jeweils ein Stutzen zum Anschließen für ein Ende einer Leitung vorgesehen ist und das elastische Element über einen im Stutzen festsetzbaren Sicherungsring in axialer Richtung vorspannbar ist. Dadurch lassen sich der Leitungsanschluss und die Vorspannung des elastischen Elements kombinieren. Bevorzugt ist im Stutzen ein Innengewinde zum Festsetzen des Sicherungsrings vorgesehen. Zudem wird das elastische Element über den Stutzen zentriert.

Ferner kann es vorteilhaft sein, wenn eine Arretierung zwischen der Muffe und dem Nippel vorgesehen ist, die eine Muffe und ein Federelement sowie in axialer Richtung an das Federelement anschließend Krallen umfasst, wobei die Krallen durch die Vorspannung des Federelements den Nippel in der Muffe formschlüssig festsetzen oder arretieren. Dadurch, dass die Arretierung nur durch manuelles Bewegen der Krallen gegen die Vorspannung des Federelements gelöst werden kann, wird ein unbeabsichtigtes Lösen oder Öffnen der Schnellkupplung erreicht. Hierzu sind an einem Träger bis zu acht Krallen angeordnet, wobei das Federelement über den Träger die Krallen in axialer Richtung vorspannt.

Auch ist hierzu besonders vorteilhaft, dass in der Muffe mehrere Öffnungen vorgesehen sind, durch die jeweils eine Kralle von außerhalb der Muffe nach Innen durchgeführt ist. Die Krallen greifen somit durch das Gehäuse der Muffe in eine Nut im Gehäuse des Nippels ein, wodurch die Arretierung des Nippels in einer axialen Richtung in der Muffe automatisch aufgrund der elastischen Vorspannung der Krallen in radialer Richtung nach innen erfolgt. Der Träger und die Krallen sind als einteiliges und materialidentisches Bauteil hergestellt. Als Kunststoff für den Träger, die Krallen und das Federelement findet Polyetheretherketon (PEEK) aus der Stoffgruppe der Polyaryletherketone Verwendung.

Dabei ist es vorgesehen, dass die Außenfläche des Nippels eine sich in radialer Richtung nach außen erstreckende Rampe bildet, durch die die Krallen durch das Schieben auf die Rampe in radialer Richtung nach außen gespreizt werden können. Darauffolgend ist es für eine weitere Wechselwirkung notwendig, dass die Außenfläche des Nippels in einer axialen Richtung nach der Rampe eine Nut bildet, in die die Krallen in radialer Richtung eingreifen. Zum Fixieren der Krallen in der Nut wird der Träger durch das Federelement vorgespannt.

Zur Bedienung der Arretierung ist es vorteilhaft, dass eine Hülse zum Lösen der Arretierung des Nippels vorgesehen ist, die über das Federelement und/oder die Krallen gestülpt und in axialer Richtung verschiebbar ist. Durch die Hülse lässt sich die Arretierung einfach lösen.

Die Schnellkupplung ist derart konstruiert, dass allein durch eine beim Einstecken des Nippels in die Muffe aufzubringende Kraft in axialer Richtung die Federkraft der elastischen Elemente und der Krallen überwunden wird, sich die Ventilkörper öffnen und der Nippel automatisch in der Muffe arretiert.

Weitere Vorteile und Einzelheiten der Erfindung sind in den Patentansprüchen und in der Beschreibung erläutert und in den Figuren dargestellt. Es zeigt:
- Figuren 1-4: jeweils eine Schnittdarstellung einer Schnellkupplung in verschiedenen Positionen einer Muffe zu einem Nippel;
- Figur 3a: eine Detailansicht gemäß Figur 3;
- Figur 5: eine Explosionszeichnung der Muffe gemäß den Figuren 1 bis 4;
- Figur 6: eine Explosionszeichnung des Nippels gemäß den Figuren 1 bis 4;
- Figur 7: eine Detailansicht der Muffe gemäß Figur 1;
- Figur 8: eine Detailansicht des Nippels gemäß Figur 1;
- Figur 9a: eine erste perspektivische Detailansicht eines Ventilkörpers mit elastischem Element als einteiliges Bauteil;
- Figur 9b: eine zweite perspektivische Detailansicht eines Ventilkörpers mit elastischem Element als einteiliges Bauteil.

Grundsätzlich beziehen sich die angegebenen radialen und auch die axialen Richtungen relativ zu der Mittelachse. Axial sind eine oder beide Richtungen erfasst. Als Leitung werden Schläuche oder Rohre bezeichnet, wobei Rohe aus Metall und/oder Kunststoff einteilig oder als Verbund hergestellt sein können. Insbesondere werden als Leitungen Kunststoffschläuche oder -rohre bezeichnet, die aus Polyethylen (PE), Polypropylen (PP) oder anderen Kunststoffen oder Kunststoffgemischen hergestellt sind. Das für solche Schnellkupplungen geeignete Medium ist fließfähig. Neben aggressiven Gasen kommen insbesondere Säuren und Basen in flüssigem Aggregatzustand in Betracht.

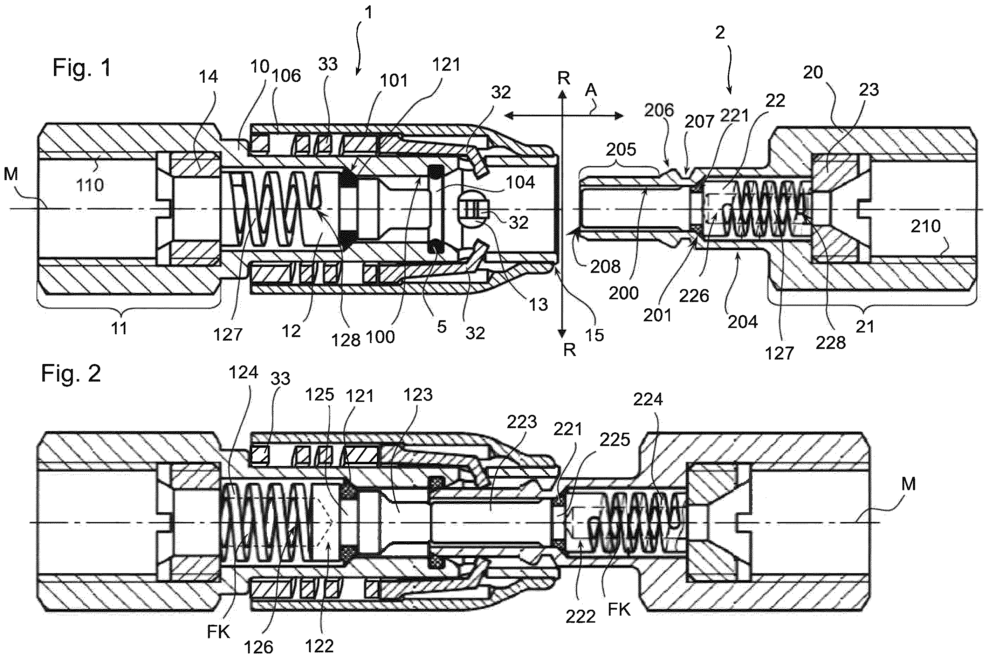

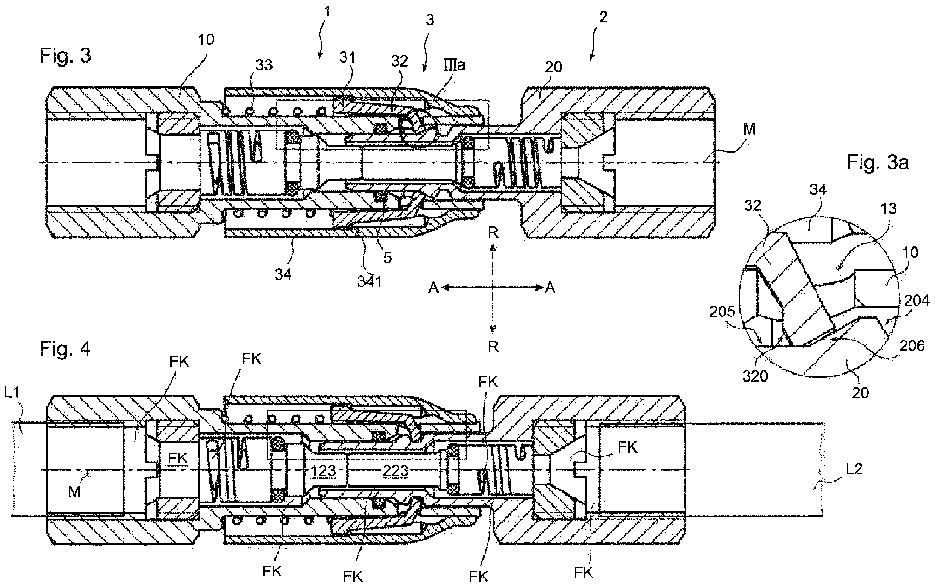

In allen Figuren sind bis auf eine Ausnahme jeweils gleiche Schnellkupplungen mit denselben Bauteilen dargestellt. Die Darstellungen in den Figuren 1 bis 4 unterscheiden sich vornehmlich in der relativen Position zwischen der Muffe 1 mit ihren Bauteilen und dem Nippel 2 mit seinen Bauteilen. Die Ausnahme ist in den Figuren 1 und 2 dargestellt. Gegenüber den Darstellungen in den Figuren 3 bis 5 ist die Querschnittsfläche des Profils der Spirale des Federelements 33 rechteckig und wesentlich größer. Der für dieses Ausführungsbeispiel vorgesehene Kunststoff erfordert für eine ausreichend starke Federraft eine größere Querschnittsfläche. In den Ausführungsbeispielen gemäß den Figuren 3 bis 5 ist das Federelement 33 aus Metall, wobei Metall aufgrund der fehlenden Resistenz gegen Korrosion nachteilig, aber hinsichtlich der Federkraft vorteilhafter sein kann.

In Figur 1 ist bezüglich der Mittelachse M die axiale Richtung mit "A" und die radiale Richtung mit "R" dargestellt. Gleiche Bauteile tragen gleiche Bezugsziffern. Gleichen Bauteilen, die in unterschiedlichen Figuren dargestellt sind, ist aus Gründen der Übersichtlichkeit nicht immer eine Bezugsziffer mit Bezugslinie zugewiesen.

Die Schnellkupplung besteht im Wesentlichen aus zwei Kupplungsteilen, nämlich einer Muffe 1 und einem Nippel 2. Der Nippel 2 wird zum Verbinden der Schnellkupplung in die Muffe 1 eingeführt (Figur 1). In einer in Figur 4 dargestellten Endposition ist die Muffe 1 mit dem Nippel 2 dicht verbunden und mechanisch gegen ein unbeabsichtigtes Lösen oder Herausbewegen der Muffe 1 aus dem Nippel 2 gesichert.

Die Muffe 1 weist ein Gehäuse 10 und einen in axialer Richtung an das Gehäuse 10 anschließenden Stutzen 11 auf. Das Gehäuse 10 ist rotationssymmetrisch zu der Mittelachse M mit einer Innenfläche 100 und mit einer Außenfläche 106 derart ausgebildet, dass die Muffe 1 innen durchgehend hohl ist. Der Stutzen 11 ist ebenfalls innen hohl und weist auf seiner Innenseite ein Innengewinde 110 zum Befestigen eines Sicherungsrings 14 auf. Das Gehäuse 10 und der Stutzen 11 sind einteilig hergestellt und bilden die in radialer Richtung äußere Begrenzung für einen Fluidkanal FK für das Fluid.

Ein zur Muffe 1 insoweit ähnlicher Aufbau findet sich auch bei dem Nippel 2, der ebenfalls ein Gehäuse 20 und einen an das Gehäuse 20 in axialer Richtung anschließenden Stutzen 21 aufweist. Das Gehäuse 20 ist in radialer Richtung durch eine Innenfläche 200 und eine Außenfläche 204 begrenzt und innen hohl.

Der hohle Stutzen 21 weist auf seiner Innenseite ein Innengewinde 210 zum Befestigen eines Sicherungsrings 23 auf. Auch sind das Gehäuse 20 und der Stutzen 21 einteilig hergestellt und bilden die in radialer Richtung äußere Begrenzung für den Fluidkanal FK.

Der jeweilige Stutzen 11, 21 und das jeweilige Innengewinde 110, 210 dienen auch zum Anschließen jeweils einer Leitung L1, L2 gemäß Figur 4. Die beiden angeschlossenen Leitungen werden durch die beiden Fluidkanäle FK von der Muffe 1 und dem Nippel 2 miteinander verbunden. Die Durchflussrichtung in der Schnellkupplung ist beliebig, ebenso wie der Aggregatzustand des Fluids flüssig oder gasförmig sein kann.

In der Muffe 1 ist ein erster Ventilkörper 12 und in dem Nippel 2 ein zweiter Ventilkörper 22 gelagert, die jeweils in axialer Richtung relativ zum Gehäuse 10, 20 bewegbar sind. Durch den Ventilkörper 12, 22 kann der Fluidkanal FK in der Muffe 1 beziehungsweise im Nippel 2 geschlossen werden. Das Schließen verhindert einen Austritt des über die Leitung L1, L2 zugeführten Fluids aus der Muffe 1 oder aus dem Nippel 2. Das Prinzip des Öffnens und Schließens der beiden Ventilkörper 12, 22 ist bei beiden Kupplungsteilen, nämlich bei der Muffe 1 und bei dem Nippel 2 das Gleiche. In der Muffe 1 dichtet der Ventilkörper 12 mithilfe eines ersten um den Ventilkörper 12 umlaufenden Dichtelements 121 an der Innenfläche 100 des Gehäuses 10 ab. Hierzu ist in der Innenfläche 100 eine Dichtfläche 101 vorgesehen, die kegelförmig ausgebildet ist. Allein durch die kegelige Form wird der Ventilkörper 12 im geschlossenen Zustand im Gehäuse 10 zentriert, da das Dichtelement 121 an der Innenfläche 100 anliegt.

Im Nippel 2 ist entsprechend ein um den zweiten Ventilkörper 22 umlaufendes zweites Dichtelement 221 vorgesehen, das an der Innenfläche 200 des Gehäuses 20 abdichtet. Auch im Nippel 2 bildet die Innenfläche 200 eine kegelförmige Dichtfläche 201, welche ebenfalls allein für eine Zentrierung im geschlossenen Zustand des Ventilkörpers 22 sorgt.

Die für die Anlage des jeweiligen Dichtelements 121, 221 notwendige Kraft wird durch jeweils ein elastisches Element 124, 224 erzeugt, dass am Ventilkörper 12, 22 vorgesehen ist und das sich am jeweiligen Sicherungsring 14, 23 abstützt. Das elastische Element 124, 224 ist am Sicherungsring 14, 23 zentriert gelagert. Durch die Einteiligkeit entfällt die Notwendigkeit, das elastische Element 124, 224 und den Ventilkörper 12, 22 in der Flucht axial und radial zueinander auszurichten. Eine Zwangsführung der Einheit bestehend aus dem Ventilkörper 12, 22 und dem elastischen Element 124, 224 durch das Gehäuse 10, 20 ist somit nicht notwendig. Im Gegenteil kann der Abstand zwischen dem Ventilkörper 12, 22 und dem Gehäuse 10, 20 und der Abstand zwischen dem elastischen Element 124, 224 und dem Gehäuse 10, 20 so weit vergrößert werden, dass der für das Fluid notwendige Fluidkanal FK gegeben ist. Gleichzeitig erlaubt das durch den Abstand gegebene Spiel des Ventilkörpers 12, 22 eine geringere Federkonstante für das elastische Element 124, 224, da keine unmittelbaren Reibungskräfte zwischen dem Ventilkörper und dem Gehäuse auftreten können.

Der Ventilkörper 12, 22 weist in axialer Richtung im Wesentlichen drei Abschnitte auf. Ein Verschlussteil 122, 222, ein an dem Verschlussteil 122, 222 anschließender Ventilschaft 123, 223 und das am Verschlussteil 122, 222 gegenüber vom Verschlussteil 122, 222 anschließende elastische Element 124, 224. Das Dichtelement 121, 221 ist in einer um das Verschlussteil 122, 122 umlaufenden Nut 125, 225 angeordnet und als O-Ring ausgebildet.

Die beiden Ventilkörper 12, 22 verschließen den Fluidkanal FK über ihre Außenfläche, weshalb sie nicht hohl sind und keinen Kanal aufweisen. Sie bilden erfindungsgemäß in sich geschlossene Ventilkörper. Zum Öffnen der beiden Ventilkörper 12, 22 stoßen die beiden Ventilkörper 12, 22 dann in axialer Richtung aneinander an, wenn der Nippel 2 in die Muffe 1 eingesteckt wird. Hierzu ist der jeweilige Ventilschaft 123, 223 entsprechend lang ausgebildet. Durch das Bewegen des Nippels 2 in die Muffe 1 kommen die beiden Ventilkörper 12, 22 gegenseitig zur Anlage und werden entgegen der Federkraft der beiden elastischen Elemente 124, 224 in axialer Richtung jeweils in Richtung des Stutzens 11, 21 bewegt. Diese mechanische Besonderheit ist in den Figuren 2 bis 4 dargestellt. Durch das Bewegen der Ventilkörper 12, 22 löst sich die dichtende Anlage und der Fluidkanal FK wird nach dem Öffnen in seinem Strömungsquerschnitt dadurch vergrößert, dass sich das Dichtelement 121, 221 von seiner Dichtfläche 101, 201 wegbewegt.

Das elastische Element 124, 224 ist ebenso wie der Ventilkörper 12, 22 aus dem gleich Kunstsoff einteilig hergestellt. Der hier verwendete Kunststoff Polytetrafluorethylen (PTFE) lässt sich jedoch nicht spritzgießen wie klassische Thermoplaste, weshalb der Ventilkörper 12, 22 und das elastische Element 124, 224 durch spanende Bearbeitung hergestellt sind.

Die Länge des Ventilschafts 123, 223 in axialer Richtung oder die Summe der Längen beider Ventilschäfte 123, 223 in axialer Richtung ist dabei so gewählt, dass sich die Ventilschäfte 123, 223 beim Einführen des Nippels 2 in die Muffe 1 erst dann berühren, wenn der Nippel 2 mit seiner Außenfläche 204 an dem in der Muffe 1 festgesetzten Dichtmittel 5 dichtend anliegt. Hierzu ist an der Außenfläche 204 des Nippels 2 eine zur Mittelachse M koaxial angeordnete Dichtfläche 205 für das Dichtmittel 5 ausgebildet. Der Bereich des Gehäuses 20 des Nippels 2, an dem die Dichtfläche 205 vorgesehen ist, wird als Tülle bezeichnet, welche die außen umlaufende Dichtfläche 205 aufweist. Durch die Wechselwirkung der Tülle mit dem Dichtmittel 5 ist es möglich, dass beim Schließen der Schnellkupplung die beiden Ventilkörper 12, 22 erst dann den Fluidkanal FK öffnen, wenn die Schnellkupplung nach außen abgedichtet ist. In Figur 2 ist diese dichte Position nahezu erreicht. Das Dichtmittel 5 sitzt fast auf der Dichtfläche 205 der Tülle auf. Beim Öffnen der Schnellkupplung ist der Fluidkanal FK entsprechend zuerst durch die Ventilkörper 12, 22 geschlossen, bevor die Dichtung zwischen den beiden Gehäusen 10, 20 durch das Dichtmittel 5 gelöst ist.

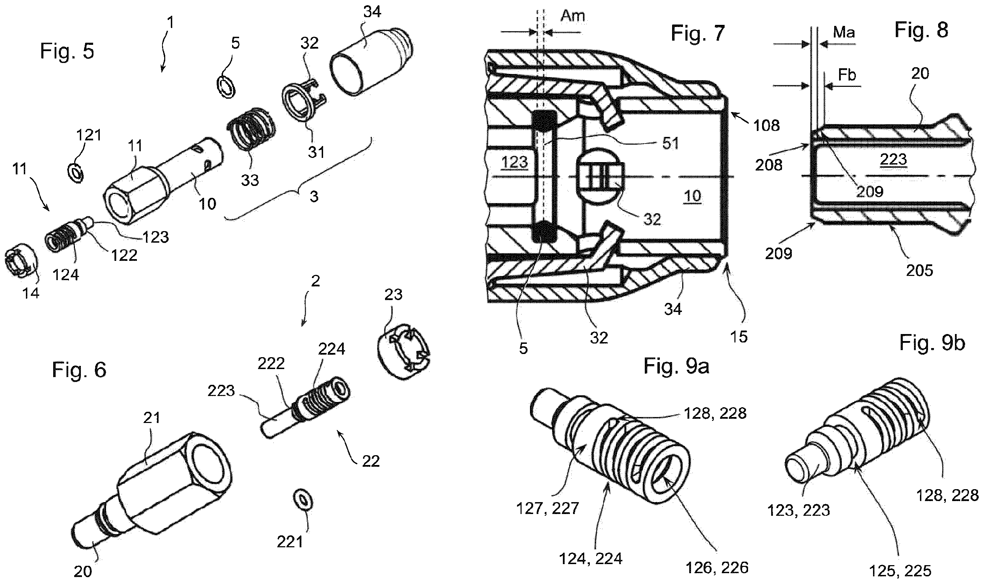

In den Figuren 7 und 8 wird das Prinzip verdeutlicht. Die Dichtung zwischen der Dichtfläche 205 und dem Dichtmittel 5 im Gehäuse 10 wird erst dann erreicht, wenn die Tülle des Nippels 2 so weit durch das Dichtmittel 5 gesteckt ist, dass das Dichtmittel 5 im Bereich seiner Mittelebene 51 auf der zylindrischen Dichtfläche 205 aufsitzt. Damit sich die beiden Ventilkörper 12, 22 über ihre Ventilschäfte 123, 223 beim Schließen der Schnellkupplung erst gegenseitig berühren, wenn die Dichtung über das Dichtmittel 5 und die Tülle gewährleistet ist, ist der Abstand Am zwischen dem Ventilschaft 123 des ersten Ventilkörpers 12 und der Mittelebene 51 des Dichtmittels 5 passend zu der Geometrie der Tülle und der Position des Ventilschafts 223 an der Gehäuseöffnung 208 der Tülle gewählt. Der Abstand Am beträgt mindestens das Maß der axialen Länge Fb der Fase 209 an der Gehäuseöffnung 208 der Tülle. Dies für den hier abgebildeten Fall, dass der Ventilschaft 223 nur um ein geringes Maß Ma und damit nicht wesentlich hinter der Gehäuseöffnung 208 in das Gehäuse 20 hinein beziehungsweise in die Tülle hinein zurücksteht.

Durch die fehlende Zwangsführung des elastischen Elements 124, 224 im Gehäuse 10, 20 und den damit erreichten Abstand in axialer Richtung, ist der Fluidkanal FK als Ringkanal zwischen der Mantelfläche 127, 227 des elastischen Elements 124, 224 und der Innenfläche 100, 200 des Gehäuses 10, 20 ausgebildet. Das Fluid strömt durch das offene Ventil am Verschlussteil 122, 122 vorbei in den Ringkanal hinein. Von dort aus strömt das Fluid durch die Spiralen der als Spiralfeder ausgebildeten elastischen Elemente 124, 224 und durch eine an die Spiralen in axialer Richtung angrenzende Öffnung 128, 228 hindurch. Das Fluid gelangt in einen in Figur 2 jeweils angedeuteten und in den Figuren 9a und 9b dargestellten zylinderförmigen Hohlraum 126, 226 innerhalb der jeweiligen Spirale. Von dort fließt das Fluid weiter durch eine zentrale Öffnung im Sicherungsring 14, 23 durch den Sicherungsring 14, 23 hindurch und in die angeschlossene Leitung L1, L2 hinein. Alternativ strömt das Fluid in entgegengesetzter Richtung und entsprechend umgekehrter Reihenfolge durch die einzelnen Bauteile. In der Muffe 1 und in dem Nippel 2 werden bei derselben Strömungsrichtung in der Schnellkupplung die Bauteile jeweils in umgekehrter Reihenfolge durchströmt.

Damit das Fluid auch bei einem vollständig komprimierten elastischen Element 124, 224, also wenn die Spiralen aneinander anliegen, noch durch das elastische Element 124, 224 fließen kann, sind Öffnungen 128, 228 als Zwangsöffnung vorgesehen (Figur 9a und 9b). Die Öffnungen 128, 228 sind jeweils in axialer Richtung am Ende der jeweiligen Spirale vorgesehen. Die beiden jeweils für die

Muffe 1 und für den Nippel 2 eingesetzten elastischen Elemente 124, 224 unterscheiden sich ausschließlich in ihren Größen, sodass die bezüglich der beiden Abbildungen 9a und 9b beschriebenen Merkmale für beiden elastischen Element 124, 224 gelten. Auf eine Unterscheidung kommt es hierbei nicht an. Das elastische Element 124 des ersten Ventilkörpers 12 weist einen gegenüber dem elastischen Element 224 des zweiten Ventilkörpers 22 größeren äußeren Durchmesser und/oder eine größere Federkonstante auf. Dadurch lassen sich unterschiedliche Bewegungen der beiden Ventilkörper 12, 22 realisieren, wenn sie sich gegenseitig wegstoßen.

Ein wesentlicher Aspekt der erfindungsgemäßen Lösung wird durch die Geometrie des elastischen Elements 124, 224 erreicht. Der durchschnittliche Abstand der Spiralen in entspanntem Zustand des elastischen Elements 124, 224 ändert sich zu den Enden der jeweiligen Spiralen hin nicht. Dadurch wird beim Komprimieren des elastischen Elements 124, 224 eine Zwangsöffnung erreicht. Dieser Vorteil wird insbesondere dann erreicht, wenn das elastische Element 124, 224 durch spanende Bearbeitung aus einem Kunststoffkörper herausgearbeitet ist. Der Zwischenraum zwischen den Spiralen wird dabei durch ein Fräswerkzeug erzeugt. Mit dem Fräswerkzeug wir der Zwischenraum bis zum Ende der Spirale gefräst, wodurch sich der damit erzeugte Abstand der Spiralen nicht ändert. Er entspricht dem Durchmesser des Fräswerkzeugs.

Nach dem Einführen des Nippels 2 in die Muffe 1 wird durch eine Arretierung 3 eine mechanische Verbindung zwischen der Muffe 1 und dem Nippel 2 hergestellt. Die in den Figuren 1 bis 4 im Schnitt und in Figur 5 perspektivisch dargestellten Bauteile der Arretierung 3 umfassen vier Krallen 32, die an einem Träger 31 befestigt sind. Der Träger 31 mit den Krallen 32 ist um die Muffe 1 herum angeordnet bzw. auf die Muffe 1 aufgesteckt und durch ein ebenfalls auf die Muffe 1 aufgestecktes Federelement 33 vorgespannt. Die Krallen 32 greifen zum Arretieren in eine Nut 207 auf der Außenseite des Nippels 2 ein. Deutlich wird das in dem in Figur 3 angedeuteten Ausschnitt IIIa, der in Figur 3a vergrößert dargestellt ist.

In der Muffe 1 sind mehrere Öffnungen 13 vorgesehen, durch die jeweils eine Kralle 32 durchgeführt ist und die Kralle 32 derart flach angewinkelt ist, dass die Kralle 32 in axialer Richtung teilweise in das Gehäuse 10 der Muffe 1 hineinragt. Das wird in den Figuren 1 bis 4 deutlicher als in Figur 3a. Zum Einbringen der Krallen 32 ist es vorgesehen, dass die Außenfläche 204 des Nippels 2 eine sich in radialer Richtung nach außen erstreckende relativ flache Rampe 206 bildet, durch die die Krallen 32 in radialer Richtung nach außen gespreizt werden können. Die zum Gleiten auf der Rampe 206 notwendigen Führungsflächen der Krallen 32 verlaufen parallel zur Rampe 206. Nach der Rampe 206 folgend federn die Krallen 32 aufgrund der durch die Rampe 206 erzeugten radialen Vorspannung in radialer Richtung in die Nut 207 ein. Zum Fixieren der Krallen 32 in der Nut 207 wird der Träger 31 durch das Federelement 33 vorgespannt.

Die angewinkelten Krallen 32 bilden zusammen mit der Nut 207 und den Öffnungen 13 eine Selbsthemmung in dem Fall, in dem man versucht, die Muffe 1 und den Nippel 2 im arretierten Zustand auseinanderzuziehen. In diesem Fall wird die Kralle 32 durch die Öffnung 13 mit ihrer Innenseite an die Flanke der Nut 207 gedrückt und schiebt sich dabei in axialer Richtung unter das Gehäuse 10 (siehe Figuren 1 bis 4). Das über die Krallen 32 übergreifende Gehäuse 10 verhindert dabei, dass sich die Krallen 32 nach außen spreizen können. Die Selbsthemmung wird dadurch verstärkt, dass die Kralle 32 auf ihrer Rückseite 320 ein relativ steiles Profil aufweist, das nicht ohne Weiteres auf der Flanke der Nut 207 aus der Nut 207 herausrutscht.

Zur Sicherung der Arretierung ist eine Hülse 34 über den Träger 31, die Krallen 32 und das Federelement 33 gestülpt. Die Hülse 34 weist einen Absatz 341 gemäß Figur 3 auf, an dem der Träger 31 in axialer Richtung anschlägt. Durch diesen Absatz 341 kann der Träger 31 mit den Krallen 32 zum Lösen der Arretierung entgegen der Federkraft des Federelements 33 zurückgeschoben werden, wodurch die Krallen 32 aus der Nut 207 gehoben werden.

Ferner weist das Gehäuse 10 der Muffe 1 einen Absatz 15 auf, an den die Hülse 34 in einer axialen Richtung anschlägt und dadurch auf dem Gehäuse 10 fixiert ist.

In den perspektivischen Darstellungen gemäß den Figuren 5 und 6 sind alle relevanten Bauteile dargestellt. Die Muffe 1 und der Nippel 2 bestehen samt der Ventilkörper 12, 22 und den Sicherungsringen 14, 23 sowie den drei als O-Ringe ausgebildeten Dichtelementen, nämlich dem Dichtmittel 5 und dem ersten und zweiten Dichtelement 121, 221 und der Arretierung 3 aus insgesamt nur zwölf Bauteilen.

Die Ausführungsbeispiele zeigen eine Schnellkupplung mit einem in Form eines Ringspalts ausgebildeten Fluidkanal FK zum mittel- oder unmittelbaren Verbinden von zwei ein Fluid transportierenden Leitungen L1, L2 aufweisend ein als Muffe 1 ausgebildetes erstes Kupplungsteil und ein als Nippel 2ausgebildetes zweites Kupplungsteil, wobei
a) die Muffe 1 und der Nippel 2 aus Kunststoff und bezüglich einer Mittelachse M zumindest bereichsweise rotationssymmetrisch ausgebildet sowie in bestimmungsgemäßem Gebrauch koaxial zu der Mittelachse M angeordnet sind,
b) die Muffe 1 ein Gehäuse 10 zum Einstecken des Nippels 2 aufweist, wobei das Gehäuse 10 hohl ist und eine Innenfläche 100 sowie eine Außenfläche 106 aufweist und
c) der Nippel 2 ein Gehäuse 20 zum Einstecken in die Muffe 1 aufweist, wobei das Gehäuse 20 hohl ist und eine Innenfläche 200 sowie eine Außenfläche 204 aufweist,
d) in der Muffe 1 ein erster Ventilkörper 12 und in dem Nippel 2 ein zweiter Ventilkörper 22 sowie jeweils ein elastisches Element 124, 224 angeordnet sind und der jeweilige Ventilkörper 12, 22 in axialer Richtung verschiebbar und das elastische Element 124, 224 in einer axialen Richtung vorspannbar ist, wobei in einer radialen Richtung zwischen der Innenfläche 100 der Muffe 1 und der Außenfläche 204 des Nippels 2 ein Dichtmittel 5 vorgesehen ist und das Dichtmittel 5 in axialer Richtung an der Muffe 1 oder an dem Nippel 2 festgelegt ist.

## Patentansprüche

1. Schnellkupplung für aggressive Medien zum mittel- oder unmittelbaren Verbinden von zwei ein Medium transportierenden Leitungen (L1, L2) über einen durch die Schnellkupplung verlaufenden Fluidkanal (FK), aufweisend ein als Muffe (1) ausgebildetes erstes Kupplungsteil und ein als Nippel (2) ausgebildetes zweites Kupplungsteil, wobei
a) die Muffe (1) und der Nippel (2) jeweils ein zumindest teilweise rotationssymmetrisch zu einer Mittelachse (M) angeordnetes hohles Gehäuse (10, 20) zum Zusammenstecken aufweisen
b) innerhalb der Muffe (1) ein erster Ventilkörper (12) und innerhalb des Nippels (2) ein zweiter Ventilkörper (22) sowie jeweils in axialer Richtung an den jeweiligen Ventilkörper (12, 22) anschließend ein elastisches Element (124, 224) angeordnet ist, wobei
c) der Fluidkanal (FK) in radialer Richtung zumindest teilweise außerhalb und zumindest teilweise innerhalb des elastischen Elements (124, 224) verläuft und
d) der Ventilkörper (12, 22) durch das elastische Element (124, 224) in axialer Richtung verschiebbar und vorspannbar ist, wodurch der Fluidkanal (FK) zwischen dem Gehäuse (10, 20) und dem Ventilkörper (12, 22) geöffnet oder geschlossen wird,
e) der Ventilkörper (12, 22) und das elastische Element (124, 224) ein einteiliges Bauteil bilden, wobei das elastische Element (124, 224) eine konzentrisch um die Mittelachse (M) umlaufende Spirale mit einem innen in der Spirale angeordneten Hohlraum (126, 226) aufweist.
**dadurch gekennzeichnet, dass**
f) das elastische Element (124, 224) eine in radialer Richtung zur Mittelachse (M) hin gerichtete Zwangsöffnung (128, 228) aufweist, die bei einem vollständig komprimierten elastischen Element (124, 224), bei dem die Spiralen aneinander anliegen, als Fluidkanal (FK) dient.

2. Schnellkupplung nach Anspruch 1, **dadurch geken nzeichnet** , dass der Ventilkörper (12, 22) und das elastische Element (124, 224) ein materialidentisches Bauteil bilden.

3. Schnellkupplung nach einem der vorstehenden Ansprüche,
**dadurch gekennzeichnet,**
**dass** der Ventilkörper (12, 22) ausschließlich über einen Ventilsitz (101, 201) im Gehäuse (10, 20) zentriert wird.

4. Schnellkupplung nach einem der vorstehenden Ansprüche,
**dadurch gekennzeichnet,**
**dass** bei einem geschlossenen Ventilkörper (12, 22) der Muffe (1) und des Nippels (2) der Ventilkörper (12, 22) relativ zu einer Gehäuseöffnung (108, 208) des Gehäuses (10, 20) um ein Maß Ma von mindestens 0,1 mm in axialer Richtung in das Gehäuse (10, 20) zurücksteht.

5. Schnellkupplung nach einem der vorhergehenden Ansprüche,
**dadurch gekennzeichnet,**
**dass** der Fluidkanal (FK) in radialer Richtung nach außen über mindestens 50% der axialen Länge des elastischen Elements (124, 224) zwischen einer äußeren Mantelfläche (127, 227) des elastischen Elements (124, 224) und der Innenfläche (100, 200) des Gehäuses (10, 20) begrenzt ist.

6. Schnellkupplung nach Anspruch 5,
**dadurch gekennzeichnet,**
**dass** in einem vollständig komprimierten Zustand des elastischen Elements (124, 224) die Öffnung (128, 228) zwischen den Spiralen erhalten bleibt.

7. Schnellkupplung nach Anspruch 6,
**dadurch gekennzeichnet,**
**dass** in einer Endposition, in der die Muffe (1) und der Nippel (2) dicht verbunden und mechanisch gegen ein unbeabsichtigtes Lösen oder Herausbewegen der Muffe 1 aus dem Nippel 2 gesichert sind, die elastischen Elemente (124, 224) vollständig komprimiert sind.

8. Schnellkupplung nach Anspruch 4,
**dadurch gekennzeichnet,**
**dass** in einer radialen Richtung zwischen der Innenfläche (100) des Gehäuses (10) der Muffe (1) und der Außenfläche (204) des Nippels (2) ein Dichtmittel (5) vorgesehen ist und das Dichtmittel (5) in axialer Richtung an der Muffe (1) oder an dem Nippel (2) festgelegt ist, wobei bei geschlossenem Ventil in axialer Richtung der Abstand (Am) zwischen dem ersten Ventilkörper (12) und der Mittelebene (51) des Dichtmittels (5) mindestens das Maß Ma beträgt.

9. Schnellkupplung nach einem der vorhergehenden Ansprüche,
**dadurch gekennzeichnet,**
**dass** eine Arretierung (3) zwischen der Muffe (1) und dem Nippel (2) vorgesehen ist, die eine Muffe (1) und ein Federelement (33) sowie in axialer Richtung an das Federelement (33) anschließend Krallen (32) umfasst, wobei die Krallen (32) durch die Vorspannung des Federelements (33) den Nippel (2) in der Muffe (1) formschlüssig festsetzen oder arretieren.

10. Schnellkupplung nach Anspruch 9
**dadurch gekennzeichnet,**
**dass** eine Hülse (34) zum Lösen der Arretierung (3) des Nippels (2) vorgesehen ist, die über das Federelement (33) und/oder die Krallen (32) gestülpt und in axialer Richtung verschiebbar ist.

11. System bestehend aus einer Schnellkupplung nach einem der vorhergehenden Ansprüche und einem Leitungssystem.

## Claims

1. A quick coupling for aggressive media comprising a direct or indirect connection of two lines (L1, L2) transporting a medium via a fluid channel (FK) running through the quick coupling, comprising a first coupling part designed as a coupling sleeve (1) and a second coupling part designed as a nipple (2), wherein
a) the coupling sleeve (1) and the nipple (2) each have a hollow housing (10, 20) arranged at least partially rotationally symmetrical to a central axis (M) for plugging together
b) a first valve body (12) is arranged inside the coupling sleeve (1) and a second valve body (22) is arranged inside the nipple (2) and an elastic element (124, 224) is subsequently arranged in each case in the axial direction on the respective valve body (12, 22), wherein
c) the fluid channel (FK) runs in the radial direction at least partially outside and at least partially inside the elastic element (124, 224), and
d) the valve body (12, 22) can be displaced and prestressed in the axial direction by the elastic element (124, 224), as a result of which the fluid channel (FK) between the housing (10, 20) and the valve body (12, 22) is opened or closed,
e) the valve body (12, 22) and the elastic element (124, 224) form a one-piece component, wherein the elastic element (124, 224) comprises a spiral running concentrically around the central axis (M) with a hollow space (126, 226) arranged in the interior in the spiral,
**characterised in that**
f) the elastic element (124, 224) comprises a positive opening (128, 228) directed in the radial direction towards the central axis (M), which serves as a fluid channel (FK) when there is a completely compressed elastic element (124, 224), in which the spirals are adjacent to one another.

2. The quick coupling according to claim 1,
**characterised in that**
the valve body (12, 22) and the elastic element (124, 224) form a material-identical component.

3. The quick coupling according to any one of the preceding claims,
**characterised in that**
the valve body (12, 22) is centred exclusively via a valve seat (101, 201) in the housing (10, 20).

4. The quick coupling according to any one of the preceding claims,
**characterised in that**,
in the case of a closed valve body (12, 22) of the coupling sleeve (1) and of the nipple (2), the valve body (12, 22) is set back in the housing (10, 20) by a dimension Ma of at least 0.1 mm in the axial direction relative to a housing opening (108, 208) of the housing (10, 20).

5. The quick coupling according to any one of the preceding claims,
**characterised in that**
the fluid channel (FK) is delimited in the radial direction outwards over at least 50% of the axial length of the elastic element (124, 224) between an outer lateral surface (127, 227) of the elastic element (124, 224) and the inner surface (100, 200) of the housing (10, 20).

6. The quick coupling according to claim 5,
**characterised in that**,
in a completely compressed state of the elastic element (124, 224), the opening (128, 228) is maintained between the spirals.

7. The quick coupling according to claim 6,
**characterised in that**
in an end position, in which the coupling sleeve (1) and the nipple (2) are tightly connected and mechanically secured against unintentional release or movement of coupling sleeve 1 out of nipple 2, the elastic elements (124, 224) are completely compressed.

8. The quick coupling according to claim 4,
**characterised in that**
a sealing means (5) is provided in a radial direction between the inner surface (100) of the housing (10) of the coupling sleeve (1) and the outer surface (204) of the nipple (2) and the sealing means (5) is fixed in the axial direction on the coupling sleeve (1) or on the nipple (2), wherein the distance (Am) between the first valve body (12) and the central plane (51) of the sealing means (5) amounts to at least the dimension Ma in the axial direction when the valve is closed.

9. The quick coupling according to any one of the preceding claims,
**characterised in that**
a detent (3) is provided between the coupling sleeve (1) and the nipple (2), which comprises a coupling sleeve (1) and a spring element (33) as well as claws (32) adjoining the spring element (33) in the axial direction, wherein the claws (32) positively fix or lock the nipple (2) in the coupling sleeve (1) by the pretensioning of the spring element (33).

10. The quick coupling according to claim 9,
**characterised in that**
a sleeve (34) is provided for releasing the detent (3) of the nipple (2), which sleeve is pulled over the spring element (33) and/or the claws (32) and can be displaced in the axial direction.

11. A system comprising a quick coupling according to any one of the preceding claims and a line system.

## Revendications

1. Accouplement rapide pour des agents agressifs, destiné à assembler indirectement ou directement deux conduites (L1, L2) transportant un agent par l'intermédiaire d'un canal à fluide (FK), s'écoulant à travers le accouplement rapide, comportant une première pièce de raccordement conçue sous la forme d'un manchon (1), et une deuxième pièce de raccordement conçue sous la forme d'un raccord mâle (2)
a) le manchon (1) et le raccord mâle (2) comportant chacun un logement creux (10, 20), placé au moins partiellement de manière symétrique en rotation par rapport à un axe médian (M), pour leur enfichage,
b) à l'intérieur du manchon (1) étant placé un premier corps de soupape (12) et à l'intérieur du raccord mâle (2) étant placé un deuxième corps de soupape (22), ainsi que chaque fois élément (124, 224) élastique se raccordant dans la direction axiale sur le corps de soupape (12, 22) respectif,
c) le canal à fluide (FK) s'écoulant en direction radiale au moins partiellement à l'extérieur et au moins partiellement à l'intérieur de l'élément (124, 224) élastique et
d) le corps de soupape (12, 22) pouvant être déplacé et précontraint dans la direction axiale par l'élément (124, 224) élastique, suite à quoi, le canal à fluide (FK) entre le logement (10, 20) et le corps de soupape (12, 22) s'ouvre ou se ferme,
e) le corps de soupape (12, 22) et l'élément (124, 224) élastique formant un composant d'un seul tenant, l'élément (124, 224) élastique comportant une spirale périphérique de manière concentrique autour de l'axe médian (M), pourvue d'une cavité (126, 226) placée à l'intérieur dans la spirale.
**caractérisé en ce que**
f) l'élément (124, 224) élastique comporte une ouverture forcée (128, 228) dirigée vers l'axe médian, qui à l'état totalement comprimé de l'élément (124, 224) élastique dans lequel les spirales sont jointives fait office de canal à fluide (FK).

2. Accouplement rapide selon la revendication 1,
**caractérisé en ce que**
le corps de soupape (12, 22) et l'élément (124, 224) élastique forment un composant en une matière identique.

3. Accouplement rapide, selon l'une quelconque des revendications précédentes
**caractérisé en ce que**
le corps de soupape (12, 22) est centré dans le logement (10, 20) exclusivement par l'intermédiaire d'un siège de soupape (101, 201).

4. Accouplement rapide selon l'une quelconque des revendications précédentes,
**caractérisé en ce que**
lorsque le corps de soupape (12, 22) du manchon (1) et du raccord mâle (2) est fermé, le corps de soupape (12, 22) se trouve en retrait dans le logement (10, 20) par rapport à une ouverture de logement (108, 208) du logement (10, 20), d'une dimension Ma d'au moins 0,1 mm dans la direction axiale.

5. Accouplement rapide selon l'une quelconque des revendications précédentes,
**caractérisé en ce que**
le canal à fluide (FK) est limité vers l'extérieur en direction radiale sur au moins 50 % de la longueur axiale de l'élément (124, 224) élastique entre une surface enveloppante (127, 227) extérieure de l'élément (124, 224) élastique et la surface interne (100, 200) du logement (10, 20).

6. Accouplement rapide selon la revendication 5,
**caractérisé en ce que**
dans un état totalement comprimé de l'élément (124, 224) élastique, l'ouverture (128, 228) entre les spirales reste maintenue.

7. Accouplement rapide selon la revendication 6,
**caractérisé en ce que**
dans une position extrême, dans laquelle le manchon (1) et le raccord mâle (2) sont assemblés de manière étanche et sécurisés mécaniquement contre une désolidarisation ou une sortie intempestive du manchon 1 hors du raccord mâle 2, les éléments élastiques (124, 224) sont totalement comprimés.

8. Accouplement rapide selon la revendication 4,
**caractérisé**
**en ce qu'**un un moyen d'étanchéité (5) est prévu dans une direction radiale, entre la surface interne (100) du logement (10) du manchon (1) et la surface externe (204) du raccord mâle (2) et le moyen d'étanchéité (5) est fixé dans la direction axiale sur le manchon (1) ou sur le raccord mâle (2), lorsque la soupape est fermée, l'écart (Am) dans la direction axiale entre le premier corps de soupape (12) et le plan médian (51) du moyen d'étanchéités (5) s'élevant au moins à la dimension Ma.

9. Accouplement rapide selon l'une quelconque des revendications précédentes,
**caractérisé**
**en ce qu'**il est prévu entre le manchon (1) et le raccord mâle (2) un blocage (3), qui comprend un manchon (1) et un élément à ressort (33), ainsi que des griffes (32) se raccordant sur l'élément à ressort (33) dans la direction axiale, par la précontrainte de l'élément à ressorts (33), les griffes (32) fixant ou bloquant par complémentarité de forme le raccord mâle (2) dans le manchon (1).

10. Accouplement rapide selon la revendication 9,
**caractérisé en ce que**
pour défaire le blocage (3) du raccord mâle (2), il est prévu une douille (34) qui est passée par-dessus l'élément à ressort (33) et / ou les griffes (32) et qui est déplaçable dans la direction axiale.

11. Système, constitué d'un accouplement rapide selon l'une quelconque des revendications précédentes et d'un système de conduites.
